# EUROPEAN PATENT SPECIFICATION

(11) **EP 3 393 800 B1**
(45) Date of publication and mention of the grant of the patent: **25.05.2022**
(21) Application number: 16834208.7
(22) Date of filing: 22.12.2016
(51) Int. Cl.: B32B 29/00, B32B 3/30, G06K 19/06, B44C 5/04

(54) **A DECORATIVE PANEL**
ZIERBLENDE
PANNEAU DÉCORATIF

(30) Priority: 22.12.2015 NL 2016003
(43) Date of publication of application: 31.10.2018
(73) Proprietor: Trespa International B.V., 6002 SM Weert (NL)
(72) Inventor: KJELLANDER, Birgitta Katarina Charlotte, 6002 SM Weert (NL); HODGSON-STOKX, Marcelle, 6002 SM Weert (NL)
(74) Representative: Algemeen Octrooi- en Merkenbureau B.V.
(86) International application number: PCT/NL2016/050907
(87) International publication number: WO 2017/111590

(56) References cited:
- EP-A1- 1 699 002
- EP-A1- 1 806 219
- EP-A1- 2 084 654
- EP-A1- 2 230 626
- WO-A1-2011/064425
- US-A- 4 789 604
- US-A1- 2003 168 514
- US-A1- 2010 164 132
- US-A1- 2012 328 849
- US-A1- 2014 225 744

## Description

The present invention relates to a decorative panel, comprising a core layer provided with a decor layer wherein the decor layer comprises a substrate layer provided with at least one coating. Furthermore, the present invention relates to the use of such a panel.

Decorative high-pressure compact laminates manufactured by the present applicant are known for outdoor applications. Such laminates consist of layers of wood-based fibres (paper and/or wood) impregnated with thermosetting resins and surface layer(s) on one or both sides, having decorative colours or designs. A transparent topcoat is added to the surface layer(s) and cured to enhance weather and light protecting properties. These components are bonded together with simultaneous application of heat and high specific pressure to obtain a homogeneous non-porous material with increased density and integral decorative surface. These panels have been disclosed in, inter alia, US Patent No. 4,801,495, US 4,789,604, US Patent application 2013/0078437.

Such panels are non-intelligent panels. This means that the function of these panels is for construction and for aesthetic purposes only. But, interactive panels are known in the art.

For example, US Patent application 2013/063009 relates to interactive furniture devices, as well as applications for providing developmental, educational, therapeutic, and entertainment benefits. Such an interactive device comprises: an exterior translucent solid surface, a sensor, a sensory feedback component located within the exterior solid surface and a processor that controls the sensory feedback component. This US publication is totally silent about the construction of the device itself but indicates that the device has at least one interactive region. Such an interactive region includes a highly durable external solid surface, which is a translucent and substantially rigid material, such as acrylic, polyester resins, pigment, bauxite, or marble dust, or a combination, with a high dielectric constant that provides light diffusion. Examples of sensors are a capacitive sensor used to track human presence, movement, or gesture, an infrared sensor used to track human presence, movement, or gesture, and a CMOS 3D sensor used to track human presence, movement, or gesture.

In addition, US Patent application 2015/188227 relates to an antenna for a transponder, in particular a near field communication (NFC) or radio frequency identification (RFID) device transponder, and to a flat panel or poster comprising the transponder. Such a tag is visible and needs additional protection to withstand the environment as weather and wind, sun, chemicals, scratches, unintentional removal (thefts). A disadvantage of the poster comprising the transponder is that the transponder can be removed very easily, for example by vandalism. In addition, such a poster cannot be used for exterior and construction applications.

International application relates to a wood board which is formed of several layers, which are joined to one another by means of adhesive, wherein the wood board comprises at least one intelligent identifier, which is arranged between two layers of the wood board. Such a wood board is formed of veneer layers and the intelligent identifier is arranged between the veneer layers of the wood board, especially the intelligent identifier is arranged on the glue line between the veneer layers. An intelligent identifier having an RFID identification circuit is used.

DE 102007030829 relates to a surface covering structure having a first layer, a recess in the first layer and at least an electronic module in the recess.

DE 202013101252 relates to a furniture board, with two large-area surfaces and peripheral edges, wherein the furniture board has a spaced bore located at the narrow sides and in the bore an RFID tag is arranged. The bore is provided with a surface for closing purposes.

EP 1 699 002 relates to a panel, i.e. a window panel adapted to be mounted in a vehicle body, comprising: a plurality of base materials, i.e. sheet glasses, which are disposed so that main surfaces thereof are made to face each other; an interlayer film member disposed between the plurality of base materials, so as to join the plurality of base materials to each other; and an electronic tag disposed between the plurality of base materials; wherein the electronic tag has an uneven surface and is coated with a coating material so that an indented portion on the uneven surface is embedded in the coating material.

EP 2 230 626 relates to a method involving reading processing information stored on a radio frequency identification (RFID) tag. A solid sheet component, i.e. solid wood panel, is processed under consideration of the processing information, which comprises data about the processing operation of the sheet component. The information is stored on the RFID tag. A recess is made in a side face of the solid sheet component, and the RFID tag is arranged at the recess, where the component is made of wood, pulp wood, wood composite or plastic.

US 2007/0193220 relates to a fire rated door comprising a data device containing production data embedded within the door, wherein the production data comprises a date that the door was manufactured, a time that the door was manufactured, an order number, a purchase number, a product identifier, a purchaser identifier, a shift identifier, a personnel identifier, a machine line identifier, one or more specifications for the door, a list of hardware for the door, a size of the door, a style of the door, a routing design identifier, a parts list, an options identifier, a special features identifier, an assembly program or a combination thereof.

US 2003/168514 relates to a multilayer structure such as a cover paper for a booklet, in particular a passport, including a radiofrequency identification device having a chip, wherein the chip is received in the thickness of the multilayer structure without leading to extra thickness, and including at least one sheet having a fibre base, in particular a cellulose blotting paper base or a non-woven fabric.

EP 2 084 654 relates to a flexible multilayer structure comprising an RFID chip and an antenna wherein the RFID chip and the antenna are integrated into the multilayer structure in such a way that they do not protrude, wherein at least one of the layers is composed of an anisotropic nonwoven material, the cavities of which are substantially filled with a flexible thermoplastic adhesive. The fibres of the nonwoven material are formed from a polymer on the basis of polyester and/or polyacrylate, wherein the fibres are so-called spun bonded nonwovens.

An object of the present invention is to provide a decorative panel that has an interactive function.

Another object of the present invention is to provide decorative panel that is an intelligent panel, i.e. a panel that can communicate with other devices.

Another object of the present invention is to provide an interactive decorative panel wherein the interactive device cannot be easily removed from the panel.

The present invention thus relates to a decorative panel, as stated in claim 1.

The present inventors found that with such a panel one or more of the aforementioned object have been achieved. Especially the location of the at least one sensor enables the provision of a panel from which the sensor cannot be taken away without destructing the panel. This is a real advantage when using the present panels in public spaces, such as railway stations, airports, swimming pools etc.

According to the present invention the at least one passive sensor of the Radio-frequency identification (RFID) type is located within the core layer, preferably that the at least one passive sensor is located within the centre of the core layer, wherein the centre is located halfway through the thickness of the core layer. In such an embodiment the passive sensor is embedded in a somewhat symmetrical construction or build-up of the core thereby reducing the negative effects of warping and buckling of the panel. In addition high pressure and temperature conditions are used during the process for manufacturing the present panel. Since the present passive sensor comprises an integrated chip and a RFID antenna the process for manufacturing the present panel has to be carried out in such a way that the components of the present passive sensor must withstand the applied high pressure and temperature conditions. The present inventors surprisingly found that the specific position of the passive sensor in the core layer enables the passive sensor to withstand these conditions.

It must be clear that the present invention is not restricted to only one specific position of the at least one passive sensor in the present decorative panel. It is possible to have an embodiment wherein one or more passive sensors are located within the present decorative panel at different positions. This means also that in the core layer passive sensors may be placed at the circumference the panel, at the middle, or in a specific geometric pattern, or any combination thereof.

In the present invention the at least one sensor is a passive sensor, of the Radio-frequency identification (RFID) type, especially of the near field communication (NFC) type. The present invention is not restricted to a specific number of sensors, nor to a specific combination of sensors. The sensors may be rigid or flexible. The most common RFID sensors operate in three frequency ranges: Low Frequency (LF), High Frequency (HF), and Ultra High Frequency (UHF). The higher the frequency the longer the distance of the communication. The passive radio-frequency identification (RFID) tag, the so called transponder, harvests its energy from a specific electromagnetic signal. The harvesting is based on induction, where the electromagnetic radiation is translated into current by the antenna in the RFID tag. The harvested energy is used by the RFID chip to translate the stored information at the RFID chip to a signal that is transmitted via the same RFID antenna. The transmitted RFID information string is read by the RFID reader which includes an encoder to translate the string to a command for the reader device. The RFID antenna has thus two main functions in the transponder: to inductively charge the RFID chip, and to transmit the stored information from the RFID chip. The RF antenna on the tag for the LF and the HF range is commonly a coil, while a dipole and/or loop is commonly used for the UHF RFID. The higher the frequency, the longer the maximum distance between the reader and RFID tag. The UHF RFID has a typical operating range that is larger than 10 m, the radio signal in this frequency is, however, easier absorbed, deflected and/or detuned by surrounding materials. The LF waves are less sensitive to absorption, deflection and detuning, the reading distance is however shorter, typically < 1m. The passive RFID tag transmits the electronically stored information, from the RFID chip to the reader device. Since waves, especially UHF, are sensitive to materials between the reader and RFID sensor, the sensors are commonly placed at the outside of the objects. A panel with considerable thickness (>1mm) will have a negative influence on the UHF radio wave propagation. Therefore it is not advisable, or even possible, to place a RFID sensor at the backside of a >>1 mm thick panel. This invention solves this problem by placing the passive RFID sensor within the panel, thus closer to the surface, which limits the negative influences on wavelength propagation, while the sensor is invisible and seamlessly integrated into the panel. The present sensor can thus be seen as a communication sensor.

Near Field communication (NFC) technology is a specialized subset of the RFID technology in the HF range. The NFC sensor performs the same functions as the RFID. One main difference is that NFC reader technology is nowadays available in the majority of mobile phones, which is not the case for readers for the other RFID technologies. The NFC is a set of short-range wireless technology at the frequency 13.56 MHz, typically requiring a reading distance of 10 cm or less. NFC tags are passive which can be read, and written to, by a NFC reader. Identical to RFIDs, NFC involves a reader (e.g. smart phone) and a target (NFC tag). The reader has two functions: it first powers the NFC by means of electromagnetic charging, i.e. induction. The present panel equipped with the passive sensor does not require batteries. The second function of the NFC tag is to convert the electronically stored information on the NFC chip and transmit this string via the NFC antenna to the reader. The reader encodes the string, which may be a command to open a website address in the browser of the smart device.

The present invention places the passive RFID sensor within the panel, closer to the surface, which limits the negative influences on wavelength propagation, while the sensor is invisible and seamlessly integrated into the panel.

In the present decorative panel the core layer comprises a thermo pressed stack of resin impregnated papers, for example a stack of phenol resin impregnated papers. The content of heat-curable resins is 20 to 250% by weight, relative to the particular layer. In such an embodiment the at least one passive sensor is located between layers of resin impregnated papers.

The present inventors found that the exact positioning of the passive sensor is critical. In addition, the passive sensor as such may not easily be detached from the stack of resin impregnated papers during the process for manufacturing the panel. Furthermore, it is desirable that during the process for manufacturing the panel the passive sensor stays at the correct position where it has been placed by the process operator or machine. On basis of these aspects the at least one passive sensor is provided on a support layer, wherein the support layer is impregnated with resin from adjacent layers of resin impregnated papers in the core layer. This step of impregnation can take place during the process for manufacturing the panel, or the support layer of the passive sensor can be pre-wetted with the resin and the thus pre-wetted passive sensor can be placed at the correct position on the core layers. The support layer is impregnated with the resin used in the resin impregnated papers in the core layer. An example of a support layer is a paper layer. The support layer to be used in combination with the passive sensor is preferable made from a deformable material. This deformable material is able to deform during the high pressure and temperature conditions prevailing during the process for manufacturing the panel. Such a deformable material will have a positive influence on maintaining the structural dimensions of the panel, i.e. the prevention of the occurrence of negative effects of warping and buckling of the final panel.

In an embodiment the stack of resin impregnated papers is provided with one or more recesses, in which one or more recesses the at least one passive sensor is placed.

According to another embodiment non-wovens and wovens of wood fibres, glass fibres, textile fibres, synthetic fibres, carbon fibres, or a mixture thereof, can be used to partly or completely replace the paper in the resin impregnated stack. In yet another embodiment the resin impregnated paper can be replaced by a prepreg. Such a prepreg can be considered as a consolidated core of a fibre containing material comprised of wood or cellulose fibres which are coated with a thermosetting synthetic resin, the resin having been added to the fibres as an aqueous solution prior to heat-hardening of the resin. The thickness of prepregs may be considerable larger than a typical paper, and may include thicknesses > 1 cm, or even greater.

A method for manufacturing prepregs has been disclosed in US 4, 503,115 and US 6,387,489 in the name of the present applicant. For example according to US 6,387,489 after drying the fibres are stored or passed directly to spreader equipment. The resin-treated fibres may be further processed without or with pigments. The mixture made from resin-treated fibres and pigments is introduced to spreader equipment which deposits the fibres and the pigments continuously and uniformly with random orientation, producing, distributed across the entire width of a horizontal conveyor belt, a web-like mat, which is press-molded either individually or together with other web-like mats of this type, to form the core layer. After continuous shaping of the mat on the conveyor belt, using scrapers, brushes, belts or rollers, the prepreg is given a preliminary press-moulding and compacted, with thickness reduction, in calendering equipment.

In the invention the at least one sensor is placed within the thermo pressed stack of resin impregnated papers.

In another embodiment the present decorative panel further comprises at least one passive sensor located at one or more positions chosen from the group of a position located between the decor layer and the core layer, a position located within the decor layer, a position located between the substrate layer and the at least one coating and a position located within the at least one coating.

In order to prevent the formation of an uneven outer surface of the present panel the present inventors found that is possible to provide the stack of resin impregnated papers with one or more recesses. Those recesses can be used to position the at least one sensor in the respective recesses. In such an embodiment it is preferred that the recesses provided with sensors are covered with at least one thermo pressed resin impregnated paper. The formation of one or more recesses is valid for each type of core layer as mentioned above.

The present construction of the panel and the sensor(s) is such that the sensor(s) cannot be removed without destructing the panel. During the step of bonding together the individual components, i.e. the core layer, the sensor(s) and the decor layer, with simultaneous application of heat, for example ≥ 120° C, and high specific pressure (> 7 MPa) a homogeneous non-porous panel with increased density and integral decorative surface is obtained. The sensor(s) thus fully embedded in the present panel are invisible from the outside.

In an embodiment not forming part of the invention, the present inventors found that instead of pressing the sensor in-between the papers with thermo curable resins, at least one sensor can be placed in cavities made in a thermo formable sheet of material. The dimensions of the cavity are preferably such that after placing the sensor in the cavity of the sheet, the surface of the sheet will be completely flat. The sheet with sensor(s) is placed within a stack of decor and papers with thermo curable resin, just below the decor, or with at least one paper with thermo curable resin between the sheet and the decor. In a specific embodiment the side of the sheet where the sensor is placed is, is closest to the decor. According to another embodiment the decor is laminated onto the sheet with sensor, the sheet acting as the core material. In yet another embodiment the thermo formable sheet replaces the substrate paper of the decor, or is incorporated above or below the substrate. In one of such embodiments the substrate layer of the decor layer comprises at least one thermo formable sheet. The adhesion can be stimulated by applying an adhesive on the sheet, the decor or both, before lamination.

The thermo formable sheet may include one or more thermoplastic polymers, wherein the thermoplastic polymers will plastically deform upon applying thermal pressure. The thermoplastic sheet may include fillers, as minerals, reinforcement fibres of e.g. glass, synthetic, carbon, or other types. The purpose of the fillers is to modify the physical properties of the thermo formable sheet, as e.g. reinforce it.

The integrated sensor is encapsulated by the panel, which protects the device to the environment. Such environmental protection can include but is not limited to wind, weather, sun, chemicals, scratches, temperature, moisture and humidity. The encapsulation also prevents unintentional removal (theft) of the sensor. Since the sensor is passive and can be updated externally, an intentional removal, in form of replacing, is not needed.

The present invention also relates to a decorative panel wherein core comprises at least one thermo formable sheet. In such an embodiment the core comprises a stack of resin impregnated papers, wherein the at least one thermo formable sheet is positioned between the decor layer and the stack of resin impregnated papers.

The at least one thermo formable sheet is preferably provided with one or more recesses, in which one or more recesses the at least one sensor is placed.

The present invention furthermore relates to a method for manufacturing a decorative panel as discussed above, the method comprising:
i) providing at least one passive sensor of the Radio-frequency identification (RFID) type, the passive sensor comprising an integrated RFID chip and a RFID antenna, said at least one passive sensor being provided on a support layer;
ii) providing a core layer comprising individual layers of resin impregnated papers;
iii) providing a decor layer comprising a substrate layer provided with at least one coating;
iv) positioning the at least one passive sensor of step i) in the core layer of step ii);
v) contacting the decor layer and the construction of step iv);
vi) applying pressure and temperature conditions on the composite of step v) for obtaining a decorative panel provided with the at least one passive sensor of the Radio-frequency identification (RFID) type in the core layer, wherein said support layer is impregnated with resin from adjacent layers of resin impregnated papers in the core layer.

In an embodiment it is preferred wherein in step iv) the at least one passive sensor is located within the centre of the core layer, wherein the centre is located halfway through the thickness of the core layer.

In an embodiment step iv) further comprises applying a first amount of individual layers of resin impregnated papers on top of each other, positioning the at least one passive sensor of step i) on the first stack of resin impregnated papers thus obtained and a step of further applying a second amount of individual layers of resin impregnated papers on the first stack of resin impregnated papers provided with the at least one passive sensor, wherein the first amount and the second amount are such that the at least one passive sensor is located within the centre of the core layer, wherein the centre is located halfway through the thickness of the core layer.

In such a method the at least one passive sensor is provided on a support layer and the support layer thereof is pre-wetted with resin before step iv) is carried out. Such a support layer enables the impregnation with resin and is deformable during step vi).

The present invention furthermore relates to the use of the present decorative panel in furniture. Examples of interactive furniture are benches, chairs, or stools, as well as tables, such as coffee tables, dining tables, cocktail tables, conference tables, side tables, picnic tables, or outdoor tables.

The present invention furthermore relates to the use of the present decorative panel in exterior walls and facades.

The present invention also relates to the use of the present decorative panel in interior decoration.

Examples of applications of the present panels are: the use of the present panel in the tables of restaurants and bars. The menu can be accessed by reading the passive device by a smart phone. The present panels are used as wall-panels and/or flooring at airports, hospitals, train stations, bus stations, ferry terminals and public areas. The passive devices can be read by active devices mounted in white canes carried by blind persons. The information may include for example security information as 'you are approaching gate 5 at your left'. The present panels are used as exterior or interior panels in buildings or monuments. The passive devices transmit security and local sightseeing information, information that cannot be electronically available in areas without or with irregular power supply, such as remote historical sites, mountain huts, and isolated weather stations. Another application is the integration of the present panel in the furniture or wall decoration at waiting stops or terminals for public and private transport. The information may include for example a link to time-table and current traffic situation. Other uses are integration in the furniture or wall decoration in train wagons, bus interior or ferry interior. The information includes information of the destinations, on-board restaurants and shops. And, the use of the present panels in the cupboard-door of a household kitchen. The passive device communicates the link to the shopping list that your housemate recently updated. The integration of the present panel in the exterior panel at your house front door. The passive device, which is invisible to the unknown, is read by the delivery company to get the latest update where the parcel can be places in case you are not at home. Placing an UHF RFID tag within a facade element can provide information of panels at considerable heights of high constructions, such as producing company, type, architect, construction company, etc. The same type of information can be used if a replacement panels is required, the data is stored in the panel, and remains with the panel during its lifetime.

The advantages of the present panel can thus be identified as follows: non-visible, seamless integration, encapsulation, i.e. protection against environment, physical properties of panel remains unaltered compared to a panel without the present sensor(s). No radiation is emitted when the passive device is in resting mode. During operation of the passive RFID device, the radiation is close to zero.

Further advantages of the invention will become apparent by reference to the detailed description of preferred embodiments.

**Table 1: list of NFC tags**

| **NFC tag - sticker** | **Diameter (mm)** | **IC manufacturer** | **bytes** |
|---|---|---|---|
| MIFARE DESFire EV1 (MF3ICD41) | 38 | NXP | 3356 |
| Topaz 512 (BCM20203T512 or TPZ-505-016) | 29 | Broadcom | 512 |
| NTAG213 | 38 | NXP | 144 |
| MIFARE Ultralight (MF01CU1) | 50x50 (sq.) | NXP | 46 |

Table 1 show the four commercial available NFC tags on stickers which used in the present experiments.

### Example 1

In the first experiment the tags (see Table 1) were positioned directly below the decor paper, i.e. on top of the core layer and adjacent to the decor paper. The conditions during the manufacturing of the panel were as follows: pressure (> 7 MPa), temperature (≥ 160° C) and time (10-20 minutes, preferably 20 minutes). These conditions were maintained for all other experiments as discussed below. The results are shown in Table 2. The present tags communicate with electromagnetic waves after being induction charged via the antenna and external device. The tags used here are tags provided on a support layer, wherein the support layer enables the impregnation with resin.

**Table 2: Results of panel after manufacturing according to Example 1**

| | | | | | |
|---|---|---|---|---|---|
| | | | | | |

| **NFC tag - sticker** | **Before panel pressing** | | **After panel pressing** | | **Surface appearance** |
|---|---|---|---|---|---|
| | **Read** | **Write** | **Read** | **Write** | |
| MIFARE DESFire EV1 | OK | OK | OK | OK | NOK |
| Topaz 512 | OK | OK | OK | OK | Slight relief |
| NTAG213 | OK | OK | OK | OK | NOK |
| MIFARE Ultralight | OK | OK | OK | OK | Slight relief |

The present inventors found that the function of the NFC tags was identical after pressing as before pressing. The surface of the panel showed local structures following the size of the tags; two tags show very slight relief structure (ultra-light and Topaz).

### Example 2

The same starting materials as used in Example 1 were applied, except that one single kraft paper is placed between the NFC tag and the decor. In addition, an area of the size of the tag was cut out of one the kraft sheet and the tag was placed in the empty space of the perforated Kraft sheet. The results are shown in Table 3.

**Table 3: Results of panel after manufacturing according to Example 2**

| | | | | | | |
|---|---|---|---|---|---|---|
| | | | | | | |

| **NFC tag - sticker** | **Depth in panel (mm)** | **Before panel pressing** | | **After panel pressing** | | **Surface appearance** |
|---|---|---|---|---|---|---|
| | | **Read** | **Write** | **Read** | **Write** | |
| MIFARE DESFire | 0.2 | OK | OK | OK | OK | NOK |
| NTAG213 | 0.2 | OK | OK | OK | OK | NOK |
| MIFARE Ultralight | 0.2 | OK | OK | OK | OK | OK |

Identical press settings (as materials, pressure, temperature and time) were used for all NFC tags. The conditions are similar to those mentioned in Example 1.

Table 3 shows that the function of the NFC tags was identical after pressing as before pressing. The surface appearance was not affected by the MIFARE ultra-light tag. The two other tags, however, still show surface structure, however less apparent compared to Example 1.

### Example 3

The same starting materials as used in Example 2 were applied, except for the location of the sensors. The sensors were placed between two kraft sheets at different depth before pressing the panel. This means that two kraft sheets are present at the side of the decor layer and that the remaining number of kraft sheets is separated from these two kraft sheets by the sensor. Identical press settings (as materials, pressure, temperature and time) were used for all NFC tags. The conditions are similar to those mentioned in Example 1.

**Table 4: Results of panel after manufacturing according to Example 3**

| **Experiment 3** | | | | | | |
|---|---|---|---|---|---|---|
| **NFC tag - sticker** | **Depth in panel (mm)** | **Before panel pressing** | | **After panel pressing** | | **Surface appearanc e** |
| | | **Read** | **Write** | **Read** | **Write** | |
| MIFARE DESFire EV1 | 0.5 | OK | OK | OK | OK | OK |
| Topaz | 0.5 | OK | OK | OK | OK | OK |
| MIFARE DESFire EV1 | 1.2 | OK | OK | OK | OK | OK |
| Topaz | 1.2 | OK | OK | OK | OK | OK |
| NTAG213 | 2.3 | OK | OK | OK | OK | OK |

Table 4 shows that the function of the NFC tags was identical after pressing as before pressing. In addition, the surface appearance is identified as ok for all depths, i.e. a value of at least 0.5 mm.

From the experiments shown here it is clear that intelligent decorative high-pressure compact laminates can be manufactured without destroying the sensor embedded therein. In other words, the experiments demonstrate that the NFC tags are operational after pressing the HPL panel at 70 bars and 160 °C. In addition all tags are invisible at the panel surface, especially when integrating the tag at minimum of 0.5 mm depths in the panel, wherein the depth is calculated from the outer surface of the panel.

The present inventors have carried out some experiments by placing passive RFID tags between papers with thermo curable resin in a similar way as described in example 3. List of RFID labels and their specific operating frequency are found in table 5. The RFID labels are passive; the antenna on the label is receiving the specific RF signal to power the transmission of electronic data from the label.

**Table 5: list of RFID labels.**

| **RFID label** | **Operational Frequency** | **Memory** |
|---|---|---|
| Hitag S2048 | 125kHZ/134.2kHz | 256 bytes |
| Mifare Desfire EV1 4k, CPU | 13.56MHZ | 4k bytes |
| NXP Mifare 1k, Fudan F08 | 13.56MHz | 1K bytes |
| NXP Mifare 4k, Fudan F32 | 13.56MHz | 4K bytes |
| UCODE HSL (High Frequency Smart Label), SL3 ICS3001, NXP | 840 - 960 MHz | 216 bytes |

In the next examples a cavity was made at the surface of a thermo formable sheet by means of a hot press. The size of the cavity thus obtained is comparable with the size of the sensor. The sensor was placed in the cavity. The components can be adhered to each other by thermal pressing, lamination using adhesives. The sensor including thermo formable sheet can act as the core layer in the panel or as part of the core layer. At the surface of the panel, a decor layer was placed.

### Example 4

According to example 4 the decor was laminated to the thermo formable sheet including the sensor. In this embodiment the thermo formable sheet acted as the core. The sensor and decor adhered to the core by heat pressing to a temperature above the glass temperature and below the melting temperature of the thermo formable sheet. The thermo formable material acted as the glue.

### Example 5

In example 5 an adhesive was applied on the thermo formable sheet including the sensor, or on the backside of the decor, or on both. Thereafter the decor was laminated on top of the adhesive.

### Example 6

In example 6 a stack of materials consisting of papers with thermo curable resin below the thermo formable sheet was used. The decor was placed at top, and the whole stack was pressed under heat to form a laminate.

### Example 7

In example 7 at least one thermo curable paper was placed between the thermo formable sheet including the sensor and the decor. Additional thermo curable papers were placed below the thermo formable sheet. The whole stack thus obtained was pressed under heat to cure the thermo curable resins thereby forming the panels.

### Example 8

In example 8 at least one thermo curable paper was placed between the thermo formable sheet including the sensor and the decor. The stack thus obtained was pressed under heat to cure the thermo curable resins thereby forming the panels.

### Example 9

In example 9, the thermo formable sheet as used in the above discussed examples 1-8 was replaced by a sheet of wood fibers and thermo curable resin. A cavity was created by removing material from the sheet, while keeping the sheet below its melting temperature, preferable below its glass temperature. The material can be removed by a drill, saw or by other means. The sensor was placed in the cavity thus obtained, and the panel was produced following the same procedure as in the above discussed examples 1-8. The present inventors found that by replacing the wood fibers with other type of fibers or fillers, such as glass fibers, synthetic fibers, carbon fibers, an acceptable mechanical performance was obtained.

### Example 10

The same materials and process conditions as mentioned in Example 1 were used, except that the core layer was an assembly of stacked prepregs.

### Example 11

The same materials and process conditions as mentioned in Example 10 were used, except that the an area of the size of the tag was cut out of the surface layer of the assembly of prepregs and the tag was placed in the empty space of the perforated assembly of prepregs.

All experiments, i.e. examples 4-11, provided an acceptable communication between the tag and the reader,

Similar experiments were carried out by replacing the resin impregnated paper with a non-woven or woven of glass fibers, wood fibers, synthetic fibers, carbon fibers.

The present inventors carried out additional examples for investigating the effect of adhesion on panel properties. To investigate the effects on the adhesion between the tag and core materials, the present inventors studied the following experiments.
sample A: NFC tags of sort sticker NTAG213 (plastic carrier with adhesive).
sample B: NFC tags on paper Mifare Ultralight EV1, without adhesive.
Sample C: plastic sheet of same size as Sample A and B, PET.

The layer build-up of the panel: Sample A-C were placed in the center of 52 impregnated kraft sheets. Decorative layers were symmetrically added to the lower and upper surfaces. The conditions during the manufacturing of the panel were as follows: pressure (> 7 MPa), temperature (≥ 160° C) and time (10 minutes).

Results:
Sample A: when extensive bending of panel, the cleavage plane is at topside (non-adhesion side) of NFC tag.
Sample B: when extensive bending of panel, the cleavage plane is through the NFC tag, parts of tag remains on upper side, parts on lower.
Sample C: cleavage plane at the plastic sheet which is not adhered to the core, and falls out.

On basis of these additional experiments the present inventors conclude the following:
Sample A: mechanical adhesion between glue-core materials.
Sample B: mechanical adhesion by resin penetration in paper carrier.
Sample C: no adhesion (mechanical nor chemical), since no resin penetration or deformation of the plastic sheet.

## Claims

1. A decorative panel, comprising a core layer comprising a thermo pressed stack of resin impregnated papers provided with a decor layer, said decor layer comprising a substrate layer provided with at least one coating, wherein at least one passive sensor of the Radio-frequency identification (RFID) type is located within said decorative panel, said at least one passive sensor is located within said core layer, said passive sensor comprising an integrated chip and a RFID antenna, said at least one passive sensor is located between layers of resin impregnated papers, **characterized in that** said at least one passive sensor is provided on a support layer, wherein said support layer is impregnated with resin from adjacent layers of resin impregnated papers in the core layer.

2. A decorative panel according to claim 1, **characterized in that** said at least one passive sensor is located within the centre of the core layer, wherein the centre is located halfway through the thickness of said core layer.

3. A decorative panel according to any of the claims 1-2, **characterized in that** said stack of resin impregnated papers is provided with one or more recesses, in which one or more recesses said at least one passive sensor is placed.

4. A decorative panel according to any one or more of claims 1-3, **characterized in that** said at least one passive sensor is of near field communication (NFC) type.

5. A decorative panel according to any one or more of claims 1-4, further comprising at least one passive sensor located at one or more positions chosen from the group of a position located between the decor layer and the core layer, a position located within the decor layer, a position located between the substrate layer and the at least one coating and a position located within the at least one coating.

6. A decorative panel according to any of claims 1-5, **characterized in that** said core comprises at least one thermo formable sheet, wherein said at least one thermo formable sheet is positioned between said decor layer and said stack of resin impregnated papers, especially that between said decor and said thermo formable sheet a thermo curable layer, preferably resin impregnated paper, is positioned.

7. A decorative panel according to any of the preceding claims, **characterized in that** said at least one passive sensor is positioned at a minimum of 0.5 mm depth within the panel, wherein the depth is calculated from the outer surface of the panel wherein the decor layer is located.

8. A method for manufacturing a decorative panel according to any one or more of the preceding claims, said method comprising:
i) providing at least one passive sensor of the Radio-frequency identification (RFID) type, said passive sensor comprising an integrated RFID chip and a RFID antenna, said at least one passive sensor being provided on a support layer;
ii) providing a core layer comprising individual layers of resin impregnated papers;
iii) providing a decor layer comprising a substrate layer provided with at least one coating;
iv) positioning the at least one passive sensor of step i) in the core layer of step ii);
v) contacting the decor layer and the construction of step iv);
vi) applying pressure and temperature conditions on the composite of step v) for obtaining a decorative panel provided with said at least one passive sensor of the Radio-frequency identification (RFID) type in the core layer, wherein said support layer is impregnated with resin from adjacent layers of resin impregnated papers in the core layer.

9. A method for manufacturing a decorative panel according claims 8, wherein in step iv) said at least one passive sensor is located within the centre of the core layer, wherein the centre is located halfway through the thickness of said core layer.

10. A method for manufacturing a decorative panel according any one or more of claims 8-9, wherein said step iv) further comprises applying a first amount of individual layers of resin impregnated papers on top of each other, positioning the at least one passive sensor of step i) on the first stack of resin impregnated papers thus obtained and a step of further applying a second amount of individual layers of resin impregnated papers on the first stack of resin impregnated papers provided with the at least one passive sensor, wherein the first amount and the second amount are such that said at least one passive sensor is located within the centre of the core layer, wherein the centre is located halfway through the thickness of said core layer.

11. A method for manufacturing a decorative panel according any one or more of claims 8-10, wherein the at least one passive sensor being provided on a support layer is preferably pre-wetted with resin before step iv) is carried out.

12. The use of a decorative panel according to anyone of claims 1-7 or obtained according to a method for manufacturing a decorative panel according to anyone of claims 8-11 in any one or more of furniture, exterior walls, facades and interior decoration.

## Patentansprüche

1. Dekorplatte, umfassend eine Kernschicht, die einen thermogepressten Stapel aus harzimprägnierten Papieren umfasst, die mit einer Dekorschicht ausgestattet sind, wobei die Dekorschicht eine Substratschicht umfasst, die mit mindestens einer Beschichtung ausgestattet ist, wobei mindestens ein passiver Sensor vom Funkfrequenzidentifikations-(RFID)-Typ sich innerhalb der Dekorplatte befindet, der mindestens eine passive Sensor sich innerhalb der Kernschicht befindet, der passive Sensor einen integrierten Chip und eine RFID-Antenne umfasst, der mindestens eine passive Sensor sich zwischen Schichten aus harzimprägnierten Papieren befindet, **dadurch gekennzeichnet, dass** der mindestens eine passive Sensor auf einer Trägerschicht bereitgestellt wird, wobei die Trägerschicht mit Harz aus benachbarten Schichten aus harzimprägnierten Papieren in der Kernschicht imprägniert ist.

2. Dekorplatte nach Anspruch 1, **dadurch gekennzeichnet, dass** der mindestens eine passive Sensor sich innerhalb des Zentrums der Kernschicht befindet, wobei das Zentrum sich auf halber Strecke durch die Dicke der Kernschicht befindet.

3. Dekorplatte nach einem der Ansprüche 1 bis 2, **dadurch gekennzeichnet, dass** der Stapel der harzimprägnierten Papiere mit einer oder mehreren Aussparungen ausgestattet ist, wobei mindestens ein passiver Sensor in einer oder mehreren Aussparungen platziert ist.

4. Dekorplatte nach einem oder mehreren der Ansprüche 1 bis 3, **dadurch gekennzeichnet, dass** der mindestens eine passive Sensor vom Nahfeldkom-munikations-(NFC)-Typ ist.

5. Dekorplatte nach einem oder mehreren der Ansprüche 1 bis 4, des Weiteren umfassend mindestens einen passiven Sensor, der sich an einer oder mehreren Positionen ausgewählt aus der Gruppe einer Position, die sich zwischen der Dekorschicht und der Kernschicht befindet, einer Position, die sich innerhalb der Dekorschicht befindet, einer Position, die sich zwischen der Substratschicht und der mindestens einen Beschichtung befindet, und einer Position befindet, die sich innerhalb der mindestens einen Beschichtung befindet.

6. Dekorplatte nach einem der Ansprüche 1 bis 5, **dadurch gekennzeichnet, dass** der Kern mindestens eine thermoformbare Lage umfasst, wobei die mindestens eine thermoformbare Lage zwischen der Dekorschicht und dem Stapel der harzimprägnierten Papiere positioniert ist, wobei insbesondere zwischen der Dekor- und der thermoformbaren Lage eine thermohärtbare Schicht, vorzugsweise harzimprägniertes Papier positioniert ist.

7. Dekorplatte nach einem der vorhergehenden Ansprüche, **dadurch gekennzeichnet, dass** mindestens ein passiver Sensor in einer Mindesttiefe von 0,5 mm in der Platte positioniert ist, wobei die Tiefe von der Außenoberfläche der Platte berechnet wird, wo sich die Dekorschicht befindet.

8. Verfahren zum Fertigen einer Dekorplatte nach einem oder mehreren der vorhergehenden Ansprüche, wobei das Verfahren umfasst:
i) Bereitstellen von mindestens einem passiven Sensor vom Funkfrequenzidentifikations-(RFID)-Typ, wobei der passive Sensor einen integrierten RFID-Chip und eine RFID-Antenne umfasst, wobei der mindestens eine passive Sensor auf einer Trägerschicht bereitgestellt wird;
ii) Bereitstellen einer Kernschicht, die individuelle Schichten aus harzimprägnierten Papieren umfasst;
iii) Bereitstellen einer Dekorschicht, die eine Substratschicht umfasst, die mit mindestens einer Beschichtung ausgestattet ist;
iv) Positionieren des mindestens einen passiven Sensors von Schritt i) in der Kernschicht von Schritt ii);
v) Kontaktieren der Dekorschicht und des Aufbaus von Schritt iv);
vi) Anwenden von Druck- und Temperaturbedingungen auf den Verbund von Schritt v), um eine Dekorplatte zu erhalten, die mit dem mindestens einen passiven Sensor des Funkfrequenzidentifikations- (RFID)-Typs in der Kernschicht ausgestattet ist, wobei die Trägerschicht mit Harz aus benachbarten Schichten aus harzimprägnierten Papieren in der Kernschicht imprägniert ist.

9. Verfahren zum Fertigen einer Dekorplatte nach Anspruch 8, wobei in Schritt iv) der mindestens eine passive Sensor sich innerhalb des Zentrums der Kernschicht befindet, wobei das Zentrum sich auf halber Strecke durch die Dicke der Kernschicht befindet.

10. Verfahren zum Fertigen einer Dekorplatte nach einem oder mehreren der Ansprüche 8 bis 9, wobei der Schritt iv) des Weiteren Aufbringen einer ersten Menge an individuellen Schichten aus harzimprägnierten Papieren aufeinander, Positionieren des mindestens einen passiven Sensors von Schritt i) auf dem so erhaltenen ersten Stapel der harzimprägnierten Papiere und einen Schritt des weiteren Aufbringens einer zweiten Menge an individuellen Schichten der harzimprägnierten Papiere auf den ersten Stapel der harzimprägnierten Papiere umfasst, der mit dem mindestens einen passiven Sensor ausgestattet ist, wobei die erste Menge und die zweite Menge derart sind, dass der mindestens eine passive Sensor sich innerhalb des Zentrums der Kernschicht befindet, wobei das Zentrum sich auf halber Strecke durch die Dicke der Kernschicht befindet.

11. Verfahren zum Fertigen einer Dekorplatte nach einem oder mehreren der Ansprüche 8 bis 10, wobei der mindestens eine passive Sensor, der auf einer Trägerschicht bereitgestellt wird, vorzugsweise mit Harz vorgenetzt wird, bevor Schritt iv) durchgeführt wird.

12. Verwendung einer Dekorplatte nach einem der Ansprüche 1 bis 7, oder erhalten nach einem Verfahren zum Fertigen einer Dekorplatte nach einem der Ansprüche 8 bis 11, in einem oder mehreren von Möbelstücken, Außenwänden, Fassaden und Innendekoration.

## Revendications

1. Panneau décoratif, comprenant une couche de noyau comprenant une pile thermo-pressée de papiers imprégnés de résine munie d'une couche de décoration, ladite couche de décoration comprenant une couche de substrat munie d'au moins un revêtement, dans lequel au moins un capteur passif du type à identification par Radiofréquence (RFID) est situé à l'intérieur dudit panneau décoratif, ledit au moins un capteur passif est situé à l'intérieur de ladite couche de noyau, ledit capteur passif comprenant une puce intégrée et une antenne RFID, ledit au moins un capteur passif est situé entre des couches de papiers imprégnés de résine, **caractérisé en ce que** ledit au moins un capteur passif est prévu sur une couche de support, dans lequel ladite couche de support est imprégnée de résine provenant de couches adjacentes de papiers imprégnés de résine dans la couche de noyau.

2. Panneau décoratif selon la revendication 1, **caractérisé en ce que** ledit au moins un capteur passif est situé au centre de la couche de noyau, dans lequel le centre est situé à mi-chemin à travers l'épaisseur de ladite couche de noyau.

3. Panneau décoratif selon l'une des revendications 1 et 2, **caractérisé en ce que** ladite pile de papiers imprégnés de résine est munie d'un ou de plusieurs évidement(s), dans ces un ou plusieurs évidement(s) ledit au moins un capteur passif est placé.

4. Panneau décoratif selon une ou plusieurs des revendications 1 à 3, **caractérisé en ce que** ledit au moins un capteur passif est de type à communication en champ proche (NFC).

5. Panneau décoratif selon une ou plusieurs des revendications 1 à 4, comprenant en outre au moins un capteur passif situé à une ou plusieurs position(s) choisie(s) dans le groupe constitué par une position située entre la couche de décoration et la couche de noyau, une position située à l'intérieur de la couche de décoration, une position située entre la couche de substrat et l'au moins un revêtement et une position située à l'intérieur de l'au moins un revêtement.

6. Panneau décoratif selon l'une des revendications 1 à 5, **caractérisé en ce que** ledit noyau comprend au moins une feuille thermoformable, dans lequel ladite au moins une feuille thermoformable est positionnée entre ladite couche de décoration et ladite pile de papiers imprégnés de résine, en particulier **en ce qu'**entre ladite couche de décoration et ladite feuille thermoformable une couche thermodurcissable, de préférence du papier imprégné de résine, est positionnée.

7. Panneau décoratif selon l'une des revendications précédentes, **caractérisé en ce que** ledit au moins un capteur passif est positionné à un minimum de 0,5 mm de profondeur à l'intérieur du panneau, dans lequel la profondeur est calculée à partir de la surface extérieure du panneau dans lequel est située la couche de décoration.

8. Procédé de fabrication d'un panneau décoratif selon une ou plusieurs des revendications précédentes, ledit procédé comprenant :
i) la fourniture d'au moins un capteur passif du type à identification par Radiofréquence (RFID), ledit capteur passif comprenant une puce RFID intégrée et une antenne RFID, ledit au moins un capteur passif étant prévu sur une couche de support ;
ii) la fourniture d'une couche de noyau comprenant des couches individuelles de papiers imprégnés de résine ;
iii) la fourniture d'une couche de décoration comprenant une couche de substrat munie d'au moins un revêtement ;
iv) le positionnement de l'au moins un capteur passif de l'étape i) dans la couche de noyau de l'étape ii) ;
v) la mise en contact de la couche de décoration et de la construction de l'étape iv) ;
vi) l'application de conditions de pression et de température sur le composite de l'étape v) pour obtenir un panneau décoratif muni dudit au moins un capteur passif du type à identification par Radiofréquence (RFID) dans la couche de noyau, dans lequel ladite couche de support est imprégnée de résine provenant de couches adjacentes de papiers imprégnés de résine dans la couche de noyau.

9. Procédé de fabrication d'un panneau décoratif selon la revendication 8, dans lequel à l'étape iv) ledit au moins un capteur passif est situé au centre de la couche de noyau, dans lequel le centre est situé à mi-chemin à travers l'épaisseur de ladite couche de noyau.

10. Procédé de fabrication d'un panneau décoratif selon l'une quelconque des revendications 8 et 9 ou les deux , dans lequel ladite étape iv) comprend en outre l'application d'une première quantité de couches individuelles de papiers imprégnés de résine les unes sur les autres, le positionnement de l'au moins un capteur passif de l'étape i) sur la première pile de papiers imprégnés de résine ainsi obtenue et une étape d'application supplémentaire d'une deuxième quantité de couches individuelles de papiers imprégnés de résine sur la première pile de papiers imprégnés de résine fournie avec l'au moins un capteur passif, dans lequel la première quantité et la deuxième quantité sont telles que ledit au moins un capteur passif soit situé au centre de la couche de noyau, dans lequel le centre est situé à mi-chemin à travers l'épaisseur de ladite couche de noyau.

11. Procédé de fabrication d'un panneau décoratif selon une ou plusieurs des revendications 8 à 10, dans lequel l'au moins un capteur passif étant prévu sur une couche de support est de préférence pré-mouillé avec une résine avant la réalisation de l'étape iv).

12. Utilisation d'un panneau décoratif selon l'une quelconque des revendications 1 à 7 ou obtenu selon un procédé de fabrication d'un panneau décoratif selon l'une quelconque des revendications 8 à 11 dans un ou plusieurs parmi des meubles, des murs extérieurs, des façades et une décoration intérieure.
